(19) **Europäisches Patentamt**
**European Patent Office**
**Office européen des brevets**

(11) **EP 2 288 937 B1**

(12) **EUROPÄISCHE PATENTSCHRIFT**

(45) Veröffentlichungstag und Bekanntmachung des Hinweises auf die Patenterteilung:
**30.03.2016** **Patentblatt 2016/13**

(21) Anmeldenummer: **09727487.2**

(22) Anmeldetag: **02.04.2009**

(51) Int Cl.:
*G01S 7/48* ^(2006.01)    *G01S 7/486* ^(2006.01)
*G01S 7/487* ^(2006.01)    *G01S 17/89* ^(2006.01)
*G06K 9/00* ^(2006.01)    *G06K 9/34* ^(2006.01)

(86) Internationale Anmeldenummer:
**PCT/EP2009/053962**

(87) Internationale Veröffentlichungsnummer:
**WO 2009/121934 (08.10.2009 Gazette 2009/41)**

(54) **VERFAHREN UND VORRICHTUNG ZUR RECHNERGESTÜTZTEN SEGMENTIERUNG EINER UMGEBUNG IN EINZELNE OBJEKTE**

METHOD AND DEVICE FOR THE COMPUTER-ASSISTED SEGMENTATION OF AN ENVIRONMENT INTO INDIVIDUAL OBJECTS

PROCÉDÉ ET DISPOSITIF DE SEGMENTATION, ASSISTÉE PAR ORDINATEUR, D'UN ENVIRONNEMENT EN OBJETS INDIVIDUELS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **03.04.2008 DE 102008017149**

(43) Veröffentlichungstag der Anmeldung:
**02.03.2011 Patentblatt 2011/09**

(73) Patentinhaber:
• **Hochschule München**
**80335 München (DE)**
• **Öniz, Volkan**
**76889 Birkenhördt (DE)**

(72) Erfinder:
• **ÖNIZ, Volkan**
**76889 Birkenhördt (DE)**
• **KRZYSTEK, Peter**
**80469 München (DE)**
• **REITBERGER, Josef**
**94269 Rinchnach (DE)**
• **SCHNÖRR, Claudius**
**68219 Mannheim (DE)**

(74) Vertreter: **Fink Numrich**
**Patentanwälte**
**European Patent and Trademark Attorneys**
**Wendl-Dietrich-Straße 14**
**D-80634 München (DE)**

(56) Entgegenhaltungen:
• **D.A. FORSYTH, J. PONCE (EDS.): "Computer vision - a modern approach (chapter 14)" 2003, PEARSON - PRACTICE HALL , UPPER SADDLE RIVER, NJ, US , XP002542264 Seite 303, Zeile 22 - Zeile 26 Absatz [14.1.2] Seite 315, Zeile 20 - Zeile 22 Absatz [14.5.3] Absatz [14.5.5]**
• **REITBERGER,J., KRZYSTEK,P., STILLA,U.: "Combined Tree Segmentation and Stem Detection using Full Waveform LIDAR Data" PROCEEDINGS OF ISPRS WORKSHOP "SILVILASER 2007", HELSINKI, FINLAND, September 2007 (2007-09), Seiten 332-337, XP002542353 in der Anmeldung erwähnt**
• **WAGNER W ET AL: "Gaussian decomposition and calibration of a novel small-footprint full-waveform digitising airborne laser scanner" ISPRS JOURNAL OF PHOTOGRAMMETRY AND REMOTE SENSING,, Bd. 60, Nr. 2, 1. April 2006 (2006-04-01), Seiten 100-112, XP025081450 ISSN: 0924-2716 [gefunden am 2006-04-01]**
• **T.M. LILLESAND, R.W. KIEFER, J.W. CHIPMAN (EDS.): "Remote sensing and image interpretation (par. 8.21)" 2004, JOHN WILEY & SON , HOBOKEN, US , XP002542265 Abbildung 8.62**

EP 2 288 937 B1

**Beschreibung**

Die Erfindung betrifft ein Verfahren und eine Vorrichtung zur rechnergestützten Segmentierung in einzelne Objekte. Insbesondere betrifft die Erfindung ein Verfahren zur rechnergestützten Segmentierung eines Waldes in einzelne Bäume.

Für die Bestandsaufnahme einzelner Objekte in einer Umgebung bestehen vielfältige Gründe. Beispielsweise ist die Bestandsaufnahme eines Waldes von großem Interesse. Sowohl aus wirtschaftlicher als auch aus ökologischer Sicht sind z.B. die Kenntnis der vorhandenen Holzmenge, die Zusammensetzung des Waldes aus verschiedenen Baumarten sowie deren örtliche Verteilung und deren Altersverteilung von Interesse. Ebenso ist die zeitliche Verfolgung der Waldentwicklung zur Klärung folgender Fragen bedeutsam: Wie stark wurde ein Wald durch einen Sturm geschädigt? Wie gut hat sich der Wald von einem Sturm erholt? Entwickelt sich der Wald langfristig besser oder schlechter, wenn aktiv Schädlinge bekämpft werden oder nicht? Wie stark hat sich ein Wald bereits über nachwachsende Bäume verjüngt?

Bei der Segmentierung eines Waldes in einzelne Bäume wird eine Waldinventur anhand eines ausgewählten Testgebiets "manuell" durch Begehung und Auszählung der Bäume vorgenommen. Diese Vorgehensweise ist jedoch sehr aufwändig und für einen gesamten Wald vergleichsweise wenig repräsentativ. Es wurden daher Verfahren entwickelt, mit denen die Erfassung und Auswertung eines Waldes durch Befliegungen oder satellitengestützt erfolgt. In einer möglichen Vorgehensweise wird die zu segmentierende Umgebung passiv im sichtbaren oder im nahen und mittleren infraroten Wellenlängenbereich erfasst und ausgewertet. Darüber hinaus existieren aktive Verfahren, bei denen der Wald mit einem Laserscanner-Verfahren abgetastet wird. Hierzu wird der Wald mit Laserstrahlen bestrahlt. Von den Bäumen rückgestreute Signale werden messtechnisch erfasst und ausgewertet.

Bei der passiven flächenmäßigen Erfassung des Waldes mit elektromagnetischer Strahlung im sichtbaren oder im nahen und mittleren infraroten Wellenlängenbereich wird die Waldoberfläche, d.h. das Kronendach des Waldes, erfasst. Insbesondere sind dies die höchsten Punkte der Baumkronen. Demgegenüber bleibt das Innere des Waldes, in welchem gegebenenfalls kleinere Bäume verdeckt sind, durch diese Verfahren unsichtbar.

Die zur Segmentierung des Waldes in einzelne Bäume eingesetzten herkömmlichen Laserscanner sind teilweise auch in der Lage, das Innere des Waldes bis zu einem gewissen Grad abzutasten. Hierbei werden sog. Hauptpulse des rückgestreuten Signals, die meist vom Boden des Waldes und vom Kronendach verursacht sind, messtechnisch erfasst. Dabei werden räumliche Koordinaten von Rückstreupunkten an den Baumkronen aus der bekannten Richtung des emittierten Laserstrahls und der Laufzeit bis zum Empfang der rückgestreuten Pulse bestimmt. Aus diesem Grund kann auf Basis solcher Laserscanner eine nur unzureichende Information über das Innere des Waldes erhalten werden.

Diese Unzulänglichkeiten in der Erfassung spiegeln sich auch in den nachgeschalteten Auswerteverfahren wieder. Ansätze zur Segmentierung einzelner Bäume eines Waldes gehen in der Regel von dem messtechnisch erfassten Baumkronendach aus. Hierdurch werden, wie beschrieben, jedoch Punkte unterhalb der Baumkronen nicht berücksichtigt. Lokale Maxima der Waldoberfläche legen die Positionen der Baumstämme fest. In [1] wird z.B. das Baumkronendach aus den lokal höchsten gemessenen Punkten gebildet. Aus [2] ist es bekannt, aus den höchsten gemessenen Punkten durch Interpolation eine dreidimensionale Fläche zu berechnen. Zur Segmentierung dieser dreidimensionalen Oberfläche in einzelne Baumkronenabschnitte wird davon ausgegangen, dass jeder Baum lokal die höchsten Punkte des Baumkronendachs bildet. Aus [3] ist es bekannt, die Baumkronensegmente als Umringpolygone durch den sog. Wasserscheidealgorithmus zu gewinnen. [4] schlägt demgegenüber vor, die Baumkronensegmente durch eine von der Steigung der Waldoberfläche abhängige Segmentierung zu ermitteln. Ein entsprechender Vorschlag findet sich auch in [1]. Die Veröffentlichung [2] schlägt zur Gewinnung der Baumkronensegmente die Verwendung des Region-Growing-Ansatzes vor. Alle genannten Verfahren lassen jedoch Informationen unterhalb der Waldoberfläche völlig außer acht, selbst wenn Informationen in den rückgestreuten Signalen teilweise vorhanden sind. Hierdurch kann eine Segmentierung in lediglich zweidimensionaler Form erfolgen, welche keine detaillierten Rückschlüsse auf den Wald zulässt.

Um eine dreidimensionale Segmentierung des Waldes vornehmen zu können, wird in [5] der Waldbereich in verschiedene übereinander liegende Ebenen unterteilt. In diesen zweidimensionalen Ebenen werden mittels morphologischer Operationen aus der Bildverarbeitung Baumkronensegmente identifiziert. Anschließend werden die Baumkronensegmente hierarchisch zusammengefügt. Diese Vorgehensweise ermöglicht jedoch eine nur indirekte und damit wenig konsistente Auswertung der aus den Lasersignalen vorliegenden dreidimensionalen Informationen.

Zur Bestrahlung eines zu segmentierenden Waldes sind darüber hinaus sog. Full-Waveform-Laserscanner bekannt, welche nicht nur die in der Regel stärksten rückgestreuten Pulse der Waldoberfläche und des Waldbodens erfassen können, sondern ein vollständiges rückgestreutes zeitliches Signalprofil. Mit diesen Laserscannern ist es prinzipiell möglich, auch Punkte von rückstreuenden Blättern und Ästen unterhalb der Baumkronen zu erfassen. Bislang sind jedoch keine Verfahren bekannt, mit welchen die von Full-Waveform-Laserscannern gelieferten Daten derart ausgewertet werden können, dass eine dreidimensionale Segmentierung ermöglicht ist.

Aus der Veröffentlichung "Computer Vision - A modern Approach (Chapter 14)" von D.A. Forsyth, J. Ponce (EDS.), 2003, PEARSON - PRACTICE HALL, UPPER SADDLE RIVER, NJ, US ist ein Segmentierungsverfahren bekannt, bei dem Punkte, die Objektbestandteile repräsentieren, ermittelt werden und jedem der Punkte ein Merkmalsvektor zugewiesen wird, der die Koordinaten des betreffenden Punktes umfasst. Das beschriebene Verfahren geht dabei von zweidimensionalen Bildern aus. In dem Verfahren wird jedem der Punkte ein Merkmalsvektor in Form von Koordinaten zugewiesen. Für jeden der Merkmalsvektoren wird ein Abstandsmaß ermittelt, das eine Ähnlichkeit zwischen den Vektoren zweier Punkte repräsentiert. Es erfolgt eine Zuordnung der den Punkten zugewiesenen Merkmalsvektoren zu disjunkten Segmenten derart, dass eine Kostenfunktion, welche die Abstandsmaße aller Merkmalsvektoren zueinander berücksichtigt, minimiert wird. Dadurch wird eine Segmentierung der Umgebung in einzelne Objekte bereitgestellt.

Aus der Veröffentlichung "Combined Tree Segmentation and Stem Detection using Fullwave Form LIDAR Data" von Reitberger, J., Krzystek, P., und Stilla, U., PROCEEDINGS OF ISPRS WORKSHOP "SILVILASER 2007", HELSINKI, FINLAND, September 2007, Seiten 332 bis 337, ist ein Verfahren zur rechnergestützten Segmentierung einer Umgebung in einzelne Objekte, insbesondere eines Waldes in einzelne Bäume bekannt. Bei diesen werden Punkte, die Objektbestandteile repräsentieren, ermittelt. Jedem der Punkte wird ein Merkmalsvektor zugewiesen, der die Koordinaten des betreffenden Punktes umfasst. Für jeden der Merkmalsvektoren wird ein Abstandsmaß ermittelt. Die zu segmentierende Umgebung wird mit elektromagnetischer Strahlung bestrahlt und von den Objekten rückgestreute Signale werden messtechnisch erfasst. Schließlich werden aus den rückgestreuten Signalen räumliche Koordinaten von den die Rückstreuung verursachenden Punkte, die Objektbestandteile repräsentieren, ermittelt. Jedem der Punkte wird ein Merkmalsvektor zugewiesen, der zumindest die räumlichen Koordinaten des betreffenden Punktes umfasst. Das darin beschriebene Verfahren berücksichtigt jedoch lediglich zweidimensionale Informationen und verarbeitet diese mit Hilfe einer euklidischen Distanzmatrix. Auf diese Veröffentlichung wird in der weiteren Beschreibung auch als Referenz [9] Bezug genommen.

Aus der Veröffentlichung "Gaussian decomposition and calibration of a novel small-footprint full-waveform digitising airborne laser scanner" von Wagner, W., et al., ISPRS JOURNAL OF PHOTOGRAMMETRY AND REMOTE SENSING, Bd. 60, Nr. 2, 1. April 2006, Seiten 100 bis 112, ist die Theorie bekannt, wie ein Laserstrahl von einem bestrahlten Objekt reflektiert wird. Eine Zerlegung einer Wellenform erfolgt unter der Annahme, dass der Sensor einen gaussförmigen Impuls aussendet und das Objekt gaussförmig reflektiert. Bei der Zerlegung wird angenommen, dass jede einzelne gaussförmige Reflexion mit drei Parametern, nämlich der Amplitude, der Standardabweichung und einer Zeitmarke, beschrieben werden kann. Die Wellen-form kann mit einer Serie von sich überlagenden Gaussfunktionen mit Hilfe eines Optimierungsverfahrens approximiert werden.

Es ist daher Aufgabe der vorliegenden Erfindung, ein verbessertes Verfahren zur rechnergestützten Segmentierung einer Umgebung in einzelne Objekte anzugeben, welches eine dreidimensionale Analyse der Umgebung erlaubt. Insbesondere soll ein Verfahren zur rechnergestützten Segmentierung des Waldes in einzelne Bäume angegeben werden. Eine weitere Aufgabe der Erfindung besteht darin, eine entsprechend ausgebildete Vorrichtung anzugeben.

Diese Aufgaben werden gelöst durch ein Verfahren mit den Merkmalen des Patentanspruches 1 sowie eine Vorrichtung mit den Merkmalen des Patentanspruches 14. Vorteilhafte Ausgestaltungen ergeben sich aus den abhängigen Patentansprüchen,

Die Erfindung schafft ein Verfahren zur rechnergestützten Segmentierung einer Umgebung in einzelne Objekte. Insbesondere schafft die Erfindung ein Verfahren zur rechnergestützten Segmentierung eines Waldes in einzelne Bäume. Bei dem Verfahren wird die zu segmentierende Umgebung mit elektromagnetischer Strahlung bestrahlt. Alle von den Objekten rückgestrahlten Signale aus einem Volumenbereich werden messtechnisch erfasst. Die elektromagnetische Strahlung kann hierbei kohärenter oder inkohärenter Natur sein. Das Verfahren stützt sich bevorzugt auf kohärente Laserstrahlen. Das Verfahren kann jedoch auch mit herkömmlichen Laserscanning-Daten vorteilhaft angewendet werden.

Aus den rückgestreuten Signalen innerhalb des Volumenbereichs werden räumliche Koordinaten von die Rückstreuung verursachenden Punkten, die Objektbestaztdteile repräsentieren, ermittelt und es wird jedem der Punkte ein Merkmalsvektor zugewiesen, der zumindest die räumlichen Koordinaten des betreffenden Punktes umfasst. Die Objektbestandteile können beispielsweise Äste, Zweige oder Blätter eines Baumes darstellen. Die die Rückstreuung verursachenden Punkte können unregelmäßig auf einer Achse verteilt sein, welche der Richtung der ausgesandten elektromagnetischen Strahlung entspricht. Um die rechenteehnische Verarbeitung zu vereinfachen, werden die einem jeden der Punkte zugewiesenen Merkmalsvektoren zu einer Punktwolke zusammengefasst.

Weiter wird für jeden der Merkmalsvektoren ein Abstandsmaß ermittelt, das eine Ähnlichkeit zwischen den Merkmalsvektoren zweier Punkten repräsentiert. Da die Merkmalsvektoren zumindest die räumlichen Koordinaten des betreffenden Punktes umfassen, kann als allgemeines Abstandsmaß im einfachsten Fall z.B. der euklidische Abstand berechnet werden.

Schließlich erfolgt eine Zuordnung der den Punkten zugewiesenen Merkmalsvektoren zu disjunkten Segmenten derart, dass eine Kostenfunktion, welche die Abstandsmaße aller Merkmalsvektoren zueinander berücksichtigt, minimiert wird, wodurch die Segmentierung der Umgebung in einzelne Objekte bereitgestellt ist.

Ferner wird die Umgebung in ein vorgegebenes räumliches Raster von Voxeln eingeteilt und die Punkte jeweils einem der Voxel zugewiesen, wobei Punkte, die im gleichen Voxel liegen, zusammengefasst werden. Die Zusammenfassung mehrerer Punkte im gleichen Voxel kann hierbei beispielsweise durch die Mittelung der weiteren, punktbezogenen Merkmale erfolgen. Insbesondere kann eine Mittelung der Intensitäten und Pulsbreiten der jeweiligen Punkte erfolgen.

Mit dem erfindungsgemäßen Verfahren werden die Unzulänglichkeiten der eingangs beschriebenen Ansätze zur Segmentierung einer Umgebung in einzelne Objekte gelöst. Bei dem erfindungsgemäßen Verfahren wird nicht mehr von einer detektierten Oberfläche der Umgebung ausgegangen. Vielmehr werden alle Informationen der rückgestreuten elektromagnetischen Strahlung aus dem gesamten Volumenbereich der Umgebung betrachtet. Im Gegensatz zu bisherigen Auswertungen lässt sich eine echte dreidimensionale Segmentierung der Objekte erzielen.

Im konkreten Fall der Segmentierung eines Waldes in einzelne Bäume lässt sich eine dreidimensionale Segmentierung der Bäume realisieren. Darüber hinaus lassen sich weitere Eigenschaften der Bäume aus den rückgestreuten Signalen ermitteln. Die dreidimensionale Segmentierung erfolgt über eine globale, zu minimierende Kostenfunktion, welche konvex und schnell auswertbar ist. Dabei übertrifft das vorgeschlagene Verfahren alle bislang bekannten Verfahren bezüglich der Genauigkeit und Vollständigkeit der erfassten Objekte. Insbesondere können erstmals auch unterstehende, d.h. verdeckte, Bäume erkannt und registriert werden. Diese hochgenaue dreidimensionale Baumerkennung kann beispielsweise genauere Auswertungen oder auch eine Baumartenerkennung mittels Klassifikationsansätzen ermöglichen.

Zweckmäßigerweise ist die elektromagnetische Strahlung durch einen Full-Waveform-Laserscanner erzeugt, wobei eine vollständige Erfassung eines jeweiligen, durch die Punkte rückgestreuten Full-Waveform-Signals erfolgt, aus dem zumindest die Koordinaten eines jeweiligen Punktes bestimmt werden. Durch die Verwendung eines Full-Waveform-Laserscanners lassen sich nicht nur die Hauptpulse messtechnisch erfassen, sondern zeitlich aufgelöst das gesamte rückgestreute Signal. Hierdurch werden auch schwächere Rückstreuungen erfasst, welche z.B. von Blättern oder Ästen verursacht werden.

Diese werden dadurch erfasst, dass das Full-Waveform-Signal zur Bestimmung der rückstreuenden Punkte in eine Reihe von Gaußfunktionen zerlegt wird. Durch die Zerlegung kann vorteilhafterweise für jeden der Punkte zumindest ein weiteres punktbezogenes Merkmal aus dem zeitlichen Verlauf der Energie des rückgestreuten Signals ermittelt werden, das oder die dem zugeordneten Merkmalsvektor hinzugefügt wird. Als weitere Merkmale kommen beispielsweise eine Pulsbreite eines Gaußpulses sowie dessen Intensität (Amplitude) in Betracht. Der Merkmalsvektor umfasst demgemäß neben den räumlichen Koordinaten auch zumindest ein weiteres punktbezogenes Merkmal, welches aus dem zeitlichen Verlauf der Energie des rückgestreuten Signals ermittelt wird.

Die zur dreidimensionalen Segmentierung notwendige Abtastung der Umgebung mit elektromagnetischen Strahlen, welche das Aussenden der elektromagnetischen Strahlung und/oder das messtechnische Erfassen der rückgestreuten Signale umfasst, kann luftgestützt durch Befliegungen, satellitengestützt oder terrestrisch erfolgen. Hierbei können die messtechnisch erfassten Daten zur späteren Auswertung aufgezeichnet oder zur direkten Auswertung an eine Recheneinheit übertragen werden. Im letzteren Fall ist insbesondere eine Online-Auswertung möglich, durch welche stark veränderliche oder sich bewegende Objekte segmentiert und überwacht werden können.

Zweckmäßigerweise wird das Abstandsmaß durch die Anwendung einer Norm auf die Merkmalsvektoren zweier Punkte ermittelt. Sofern die Merkmalsvektoren lediglich die räumlichen Koordinaten umfassen, kann beispielsweise der euklidische Abstand zwischen zwei Merkmalsvektoren ermittelt werden.

Alternativ wird das Abstandsmaß ermittelt durch die Kombination von zumindest zwei, über einen jeweiligen Parameter gewichteten und voneinander verschiedenen Abstandsmaßen. Die voneinander verschiedenen Abstandsmaße bewerten Ähnlichkeiten bzw. Abstände in dem zumindest einen weiteren, punktbezogenen Merkmal sowie räumliche Abstände der Punkte, insbesondere in x- und y-Richtung sowie in z-Richtung, unterschiedlich.

Die Segmentierung der abgetasteten Umgebung umfasst die Zusammenfassung von Punkten bzw. Merkmalsvektoren aus der ermittelten Punktewolke, die zum jeweils gleichen Objekt gehören. Dies geschieht auf Basis des zuvor genannten Abstandsmaßes für die Merkmalsvektoren. Zur Segmentierung wird eine globale Kostenfunktion, welche die Abstände aller Punkte zueinander berücksichtigt, aufgestellt und durch Zerlegung in disjunkte Teilmengen (Segmente) minimiert. In einem einfachen Fall kann als Kostenfunktion die Summe aller Abstände der Punkte innerhalb der jeweiligen Segmente zueinander über alle Segmente minimiert werden. Zur Minimierung eignet sich in einer Variante ein einfaches Clusterverfahren, wie z.B. das bekannte kMeans-Verfahren.

Alternativ wird zur Minimierung der globalen Kostenfunktion ein graphenbasiertes Verfahren verwendet, bei dem ein Graph bestehend aus den Punkten als Knoten und den Abstandsmaßen zwischen den Punkten als Kanten gebildet wird. Zweckmäßigerweise wird das graphenbasierte NCut-Maß verwendet, wobei die Kostenfunktion durch das Normalized-Cut-Verfahren minimiert wird.

In einer weiteren Alternative wird eine globale Kostenfunktion gebildet, welche über ein GraphCut-Verfahren minimiert wird. Dies entspricht der Maximierung des Flusses zwischen zwei zu bildenden Segmenten, wobei der Fluss die Summe aller Kanten zwischen Knoten der beiden zu bestimmenden Teilgraphen repräsentiert.

Im Rahmen der Segmentierung wird über einen oder mehrere Parameter die Anzahl der resultierenden Segmente festgelegt. Insbesondere werden die Segmente iterativ bis zu einem Abbruchkriterium weiter in Teilsegmente zerlegt, wodurch unter akzeptablem Rechenaufwand eine hohe Genauigkeit bei der Segmentierung erzielt wird.

Das Verfahren ermöglicht es weiterhin, dass für zumindest manche der Punkte als zumindest ein weiteres Merkmal in jeweiligen Merkmalsvektoren ein Maß, das sich aus den punktbezogenen Merkmalen anderer Punkte aus seiner lokalen Nachbarschaft berechnet, hinzugefügt wird. Beispielsweise kann die lokale Streuung der Impulsintensitäten der Punkte berücksichtigt werden. Es kann beispielsweise berücksichtigt werden, wie stark eine Konzentration von Punkten in der näheren Umgebung ist. Es kann z.B. auch verifiziert werden, ob die weiteren Merkmale (Intensität und Breite eines Gaußpulses) gleichmäßig über das Volumen verteilt sind.

Vorteilhaft wird das Maß lokal für jeden Punkt durch eine kernbasierte räumliche Filterung über alle Punkte bestimmt. Weiterhin ist es möglich, dass bekanntes Wissen über die Objekte als weitere Information in den Merkmalsvektoren ergänzt und über ein weiteres Abstandsmaß berücksichtigt wird. Dies können beispielsweise Informationen über wahrscheinliche Standorte von vertikal verlaufenden Baumstämmen sein, wenn die zu segmentierende Umgebung ein Wald ist.

Die weiteren bevorzugten Ausgestaltungen beziehen sich insbesondere auf die Segmentierung von Bäumen als Objekte in einem Wald. Gemäß einer bevorzugten Ausgestaltung dieser besonderen Anwendung des Verfahrens werden Positionen von Baumstämmen über eine Bestimmung von vertikalen Geraden in der Menge an Punkten ermittelt.

In einer weiteren Ausgestaltung werden auf Basis der gebildeten Segmente sowie den Merkmalen der darin enthaltenen Punkte eine oder mehrere der folgenden Auswertungen vorgenommen: eine Auszählung der Bäume, deren Größenverteilung sowie örtliche Verteilung; eine Klassifikation der Bäume in verschiedene Baumarten; eine Bestimmung der Holzmenge über die Anzahl und das Volumen der Baumstämme in Abhängigkeit von der jeweiligen Baumart. Die Auszählung der Bäume kann beispielsweise durch die Identifikation der Baumstämme erfolgen. Die Größe eines Baumes kann anhand der Anzahl der Punkte innerhalb eines bestimmten Segments ermittelt werden. Die örtliche Verteilung der Bäume ist durch eine Analyse der Abstände zwischen ermittelten Baumstämmen möglich. Die Klassifikation der Bäume in verschiedene Baumarten kann beispielsweise durch eines der weiteren punktbezogenen Merkmale ermittelt werden, indem von der Pulsbreite und/oder Intensität auf die Art eines bestimmten Baumtyps geschlossen wird. Die Bestimmung der Holzmenge über die Anzahl der Baumstämme und deren Volumen wird durch die Analyse der ermittelten Baumstämme möglich. Positiv wirken sich hierbei die detaillierte, dreidimensionale Erfassung der einzelnen Bäume und die hohe Erkennungsrate bei dem erfindungsgemäßen Verfahren aus. Insbesondere ermöglicht dieses Verfahren die Erkennung von kleineren Bäumen und Verjüngung unterhalb von großen Bäumen, was mit herkömmlichen Verfahren praktisch unmöglich war.

Ferner kann eine Analyse der Entwicklung eines Waldes durch einen Vergleich mehrerer Auswertungen zu verschiedenen Zeiten erfolgen. Hierzu werden die mit dem erfindungsgemäßen Verfahren ermittelten Ergebnisse, welche zu unterschiedlichen Zeitpunkten ermittelt wurden, einander gegenüber gestellt.

In einer weiteren Anwendung werden in urbanen Gebieten durch die Baumerkennung Bäume von Häusern unterschieden Gemäß einer weiteren Anwendung werden Bäume auf Obstplantagen oder Sträucher auf Agrarflächen erfasst und segmentiert.

Das erfindungsgemäße Verfahren ermöglicht auch die Segmentierung und Überwachung sich schnell veränderlicher oder sich bewegender Objekte. Als Objekte können insbesondere Häuser in urbanen Gebieten, Graupelverteilungen in Wolken zur Gewittervorhersage erfasst, segmentiert und ausgewertet werden,

Von der Erfindung ist auch ein Computerprogrammprodukt umfasst. dass direkt in den internen Speicher eines digitalen Rechners geladen werden kann und Softwarecodeabschnitte umfasst, mit denen die Schritte gemäß einem der vorhergehenden Ansprüche ausgeführt werden, wenn das Produkt auf einem Rechnet läuft.

Die Erfindung schafft darüber hinaus eine Vorrichtung zur Durchführung des oben beschriebenen Verfahrens. Hierbei werden die gleichen Vorteile erzielt, wie diese vorstehend erläutert wurden. Die erfindungsgemäße Vorrichtung umfasst ein erstes Mittel zum Ermitteln von Punkten, die Objektbestandteile repräsentieren, wobei jedem der Punkte durch das erste Mittel ein Merkmalsvektor zuweisbar ist, der die Koordinaten des betreffenden Punktes umfasst. Die Vorrichtung umfasst ein zweites Mittel zur Ermittlung eines Abstandsmaßes für jeden der Merkmalsvektoren, das eine Ähnlichkeit zwischen den Merkmalsvektoren zweier Punkte repräsentiert. Die Vorrichtung umfasst ein drittes Mittel zur Zuordnung der den Punkten zugewiesenen Merkmalsvektoren zu disjunkten Mängel derart, dass eine Kostenfunktion, welche die Abstandsmaße aller Merkmalsvektoren zueinander berücksichtigt, minimierbar ist, wodurch die Segmentierung der Umgebung in einzelne Objekte bereit gestellt ist.

Ferner umfasst die Vorrichtung ein viertes Mittel zum Bestrahlen der zu segmentierenden Umgebung mit elektromagnetischer Strahlung und zur messtechnischen Erfassung von allen von den Objekten rückgestreuten Signalen aus einem Volumenbereich. Es ist weiter ein fünftes Mittel zur Ermittlung räumlicher Koordinaten aus den rückgestreuten Signalen innerhalb des Volumenbereichs von die Rückstreuung verursachenden Punkten vorgesehen, die Objektbestandteile repräsentieren, wobei durch das zweite Mittel jedem der Punkte ein Merkmalsvektor zuweisbar ist, der zumindest die räumlichen Koordinaten des betreffenden Punktes umfasst. Schließlich umfasst die Vorrichtung ein sechstes Mittel zur Einteilung der Umgebung in ein vorgegebenes räumliches Raster von Voxeln und zur Zuweisung der Punkte jeweils zu einem der Voxel, wobei Punkte, die im gleichen Voxel liegen, zusammengefasst werden.

Die Erfindung wird nachfolgen näher anhand eines Ausführungsbeispiels unter Bezugnahme auf die Zeichnung erläutert. Es zeigen:

Fig. 1          eine schematische Darstellung der verschiedenen Verfahrensschritte des erfindungsgemäßen Verfahrens,

Fig. 2          ein exemplarisches, zeitlich aufgelöstes rückgestreutes Signal eines von einem Laserscanner ausgesandten Laserstrahls, anhand dessen Auswertung eine dreidimensionale Segmentierung vornehmbar ist,

Fig. 3          eine schematische Darstellung der Aufteilung eines Ausschnitts eines Waldvolumens in einem regelmäßigen Raster von Volumenelementen, und

Fig. 4a bis 4c          Ausführungsbeispiele resultierender Segmentierungen von Bäumen durch dreidimensionale Aufteilung einer rechnergestützt ermittelten Punktewolke.

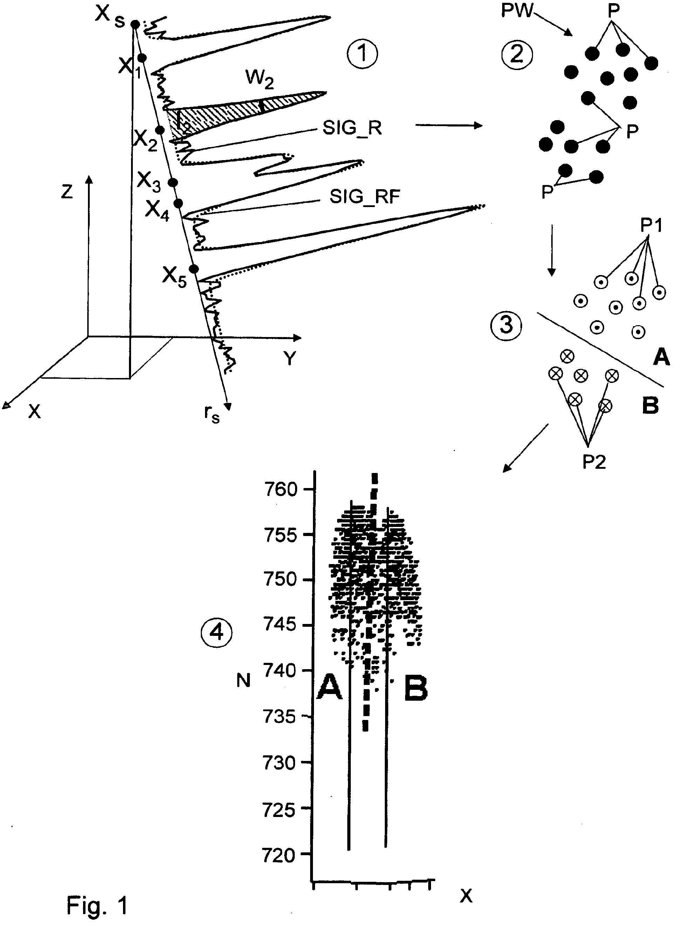

Fig. 1 zeigt schematisch das Verfahren zur rechnergestützten Segmentierung einer Umgebung in einzelne Objekte. In dem nachfolgenden Beispiel wird das Verfahren unter Bezugnahme auf eine Segmentierung eines Waldes in einzelne Bäume beschrieben. Das erfindungsgemäße Verfahren ist jedoch nicht auf diese spezielle Anwendung beschränkt, sondern kann allgemein zur Segmentierung einer Umgebung in einzelne Objekte, beispielsweise Häuser, Sträucher, Graupelverteilungen in Wolken und dergleichen angewendet werden.

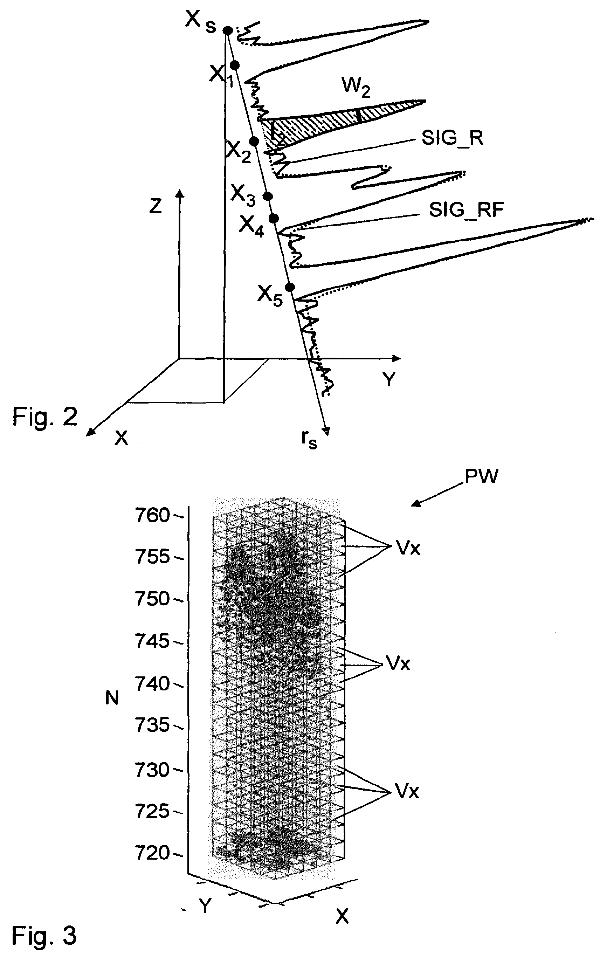

Das Verfahren zur dreidimensionalen Segmentierung eines Waldes in einzelne Bäume geht von einer Abtastung des Waldes mit elektromagnetischen Strahlen aus. Die elektromagnetische Strahlung kann kohärenter oder inkohärenter Natur sein, wobei bevorzugt kohärente Laserstrahlung verwendet wird. Die Abtastung kann luftgestützt mittels Überfliegungen, satellitengestützt oder terrestrisch erfolgen. Zur Abtastung des Waldes mit elektromagnetischer Strahlung wird vorzugsweise ein Full-Waveform-Laserscanner eingesetzt. Full-Waveform-Laserscanner sind in der Lage, nicht nur Hauptpulse zu erfassen, sondern zeitlich aufgelöst das gesamte rückgestreute Signal, das in Fig. 2 dargestellt ist. Die Darstellung in Fig. 2 entspricht dabei der in Fig. 1 bei "1" illustrierten Situation. Es ist beispielhaft ein von dem Laserscanner abgegebener Laserstrahl eingezeichnet, dessen Abstrahlrichtung durch $r_S$ gegeben ist.

Aus den Signallaufzeiten sowie der bekannten Abstrahlrichtung des Laserscanners können räumliche Koordinaten $x_i$, $y_i$, $z_i$ von Punkten $X_i$ ($i = 1 ,..., N_R$) bestimmt werden, welche Objekt- bzw. Baumbestandteile repräsentieren und das elektromagnetische Signal rückstreuen. Im Ausführungsbeispiel gemäß Fig. 1 sind bei "1" beispielhaft insgesamt fünf solcher Punkte $X_1$, $X_2$, ..., $X_5$ dargestellt. Diese die Baumbestandteile repräsentierenden Punkte sind unregelmäßig auf einer Achse verteilt, welche der Richtung $r_S$ des abgestrahlten Laserstrahls entspricht. Dabei wird die Strahlung an den Punkten $X_1$, $X_2$, ..., $X_5$ in unterschiedlicher Weise rückgestreut. Das Rückstreusignal ist mit SIG_R gekennzeichnet und weist je nach Art der Rückstrahlung eine unterschiedliche Amplitude auf. Durch die Verwendung eines Full-Waveform-Laserscanners werden gerade diese, auch schwächere Rückstreuungen, welche z.B. von Blättern oder Ästen verursacht werden, erfasst. Beispielsweise stellt der Punkt $X_S$ die Baumkrone und damit den obersten Punkt eines Baumes dar. Demgegenüber repräsentieren die Punkte $X_1$, ..., $X_4$ Äste oder Blätter eines oder mehrerer Bäume. Der Punkt $X_5$ stellt beispielsweise dem Erdboden dar, weswegen eine Rückstreuung mit besonders großer Intensität vorliegt. Die Identifikation, welcher Art die Rückstreuung ist, erfolgt durch die Zerlegung des rückgestreuten Signals SIG_R in eine Reihe von Gaußfunktionen als Basisfunktionen. Dieses Signal ist in Fig. 1 und Fig. 2 mit SIG_RF gekennzeichnet. Das Gesamtsignal bestimmt sich wie folgt:

$$s(x) = \sum_{i=1}^{N_R} A_i e^{-(x-X_i)^2 / 2\sigma_i^2}$$

Hierbei repräsentieren

s(x):      Gesamtsignal,
$N_R$:      Anzahl der Gaußfunktionen, die der Anzahl der ermittelten Punkte $X_i$ entspricht,
$A_i$:      Amplitude der i-ten Gaußfunktion,
x:      beliebige Position in der Richtung $r_S$ des Laserstrahls,
$X_i$:      Position der i-ten Gaußfunktion in der Richtung $r_S$ des Laserstrahls, welche dem ermittelten Punkt entspricht,
$\sigma_i$:      Standardabweichung der i-ten Gaußfunktion.

Für jeden der Punkte $X_i$ werden die jeweiligen räumlichen Koordinaten $x_i$, $y_i$, $z_i$ in dem in Fig. 1 bei "1" und in Fig. 2 schematisch dargestellten kartesischen Koordinatensystem mit bekanntem Bezugspunkt, vorzugsweise am Boden der zu erfassenden Umgebung, ermittelt. Jedem der Punkte $X_i$ wird ein Merkmalsvektor zugewiesen, der zumindest die räumlichen Koordinaten $x_i$, $y_i$, $z_i$ des betreffenden Punktes umfasst. Die Gesamtheit sämtlicher durch die Abtastung ermittelten Punkte wird als Punktwolke PW gekennzeichnet, welche schematisch ohne Koordinatensystem bei "2" in Fig. 1 gezeigt ist. Die sich aus einer Vielzahl von Laserstrahlen ergebenden Punkte sind hierbei allgemein mit P gekennzeichnet.

Aus dem Gesamtsignal s(x) können darüber hinaus weitere Eigenschaften der Rückstreupunkte $X_i$ bestimmt werden. Dies sind als weitere Merkmale insbesondere eine Pulsbreite $W_i = 2\sigma_i$ sowie dessen Intensität $I_i = \sqrt{2\pi}\sigma_i A_i$. Diese weiteren Merkmale sind an der Gaußfunktion des Punkts $X_2$ in Fig. 1 und Fig. 2 schematisch gekennzeichnet. Hierdurch erhält man Merkmalsvektoren $f_i$ mit entsprechenden Zusatzinformationen:

$$f_i^T = \left(x_i, y_i, z_i, W_i, I_i\right), \text{ wobei } i = 1, \ldots, N_R.$$

Um die Visualisierung der aus einer Vielzahl von Laserstrahlen ermittelten Punkte zu erleichtern sowie nachfolgende Berechnungen zu beschleunigen, ist es zweckmäßig, den durch den Laserscanner erfassten Raum in ein vorgegebenes räumliches Raster von Voxeln Vx einzuteilen. Hierbei werden die Punkte der Punktwolke PW entsprechend ihren räumlichen Koordinaten $x_i$, $y_i$, $z_i$ den jeweiligen Voxeln Vx zugeordnet. Dies ist schematisch in Fig. 3 dargestellt. Sofern in einem Voxel Vx mehrere Punkte zusammenfallen, werden diese zweckmäßigerweise zusammengefasst. Hierbei werden insbesondere deren Intensitäten und Pulsbreiten gemittelt.

In einem sich daran anschließenden Verarbeitungsschritt wird ein allgemeines Abstandsmaß definiert:

$$d(i, j) = \left\| f_i, f_j \right\|.$$

Das allgemeine Abstandsmaß d(i, j) drückt die Ähnlichkeit zwischen zwei Merkmalsvektoren $f_i$ und $f_j$ zweier Punkte aus. Umfassen die Merkmalsvektoren zweier Punkte lediglich deren räumliche Koordinaten, so kann z.B. als Norm der euklidische Abstand zur Bestimmung des allgemeinen Abstandsmaßes gemäß folgender Formel verwendet werden:

$$d(i, j) = \sqrt{\left(x_i - x_j\right)^2 + \left(y_i - y_j\right)^2 + \left(z_i - z_j\right)^2}.$$

Dabei ist es vorteilhaft, neben den räumlichen Koordinaten entsprechendes Vorwissen über die typische längliche Form eines Baumes unterschiedlich in der verwendeten Norm zu verwenden als auch weitere der punktbezogenen Merkmale aus den Merkmalsvektoren. Dies kann beispielsweise durch ein kombiniertes Abstandsmaß realisiert sein:

$$d(i, j) = e^{-(F(i,j)+X(i,j)+Z(i,j)+G(i,j))},$$

wobei

$$F(i, j) = \left\| f_i - f_j \right\|^2 / \sigma_f^2;$$

$$X(i, j) = d_{ij}^{XY} / \sigma_{XY}^2;$$

$$Z(i, j) = d_{ij}^Z / \sigma_Z^2;$$

$$G(i, j) = d_{ij}^G / \sigma_G^2.$$

Hierbei berücksichtigen F(i, j) eine Abstandsnorm auf Basis der Merkmalsvektoren $f_i$, X(i, j) den räumlichen Abstand bezüglich der x- und y-Koordinaten der Punkte, Z(i, j) den vertikalen Abstand der Punkte (entsprechend der typischen länglichen Form eines Baumes). G(i, j) kann zur Berücksichtigung weiterer hinzukommender Informationen verwendet werden. Über die jeweiligen Parameter $\sigma_f$, $\sigma_{xy}$, $\sigma_z$ und $\sigma_G$ können die Einflüsse der verschiedenen Abstandsmaße gewichtet werden. G(i, j) ermöglicht eine lokale Betrachtung der Punkte P innerhalb der Punktwolke PW. Dabei können insbesondere weitere Merkmale aus lokalen Umgebungen um die jeweiligen Punkte berücksichtigt werden, indem Beiträge von Punkten aus einer bestimmten jeweiligen Nachbarschaft bestimmt und den Merkmalsvektoren hinzugefügt werden. Dies können insbesondere Informationen über die Gleichmäßigkeit der Verteilung der Pulsbreite und Intensität über einen bestimmten Volumenbereich oder ein Maß der Konzentration der Punkte in einem ausgewählten Umgebungsbereich sein. Über $\sigma(i, j)$ ist es auch möglich, schon bekannte Informationen, wie z.B. Baumpositionen, die mit anderen Methoden bestimmt wurden, als Vorwissen in das erfindungsgemäße Verfahren einzubringen.

In einem sich daran anschließenden Schritt, welcher in Fig. 1 mit "3" schematisch gekennzeichnet ist, erfolgt die Segmentierung der Bäume. In diesem Verfahrensschritt werden die Punkte P bzw. deren Merkmalsvektoren aus der Punktewolke PW, die zum jeweils gleichen Baum gehören, zusammengefasst. Dies geschieht auf Basis des bereits ermittelten Abstandsmaßes für die Merkmalsvektoren. Hierzu wird eine globale Kostenfunktion, welche die Abstände aller Punkte bzw. Merkmalsvektoren zueinander berücksichtigt, aufgestellt. Anschließend wird die Kostenfunktion durch Zerlegung der Punktewolke PW in disjunkte Teilmengen $S_i$, $i = 1, ..., c$ (d.h. die zu ermittelnden Segmente) minimiert.

In einem einfachen Fall kann die Kostenfunktion als die Summe aller Abstände der Punkte $x_i$ innerhalb der jeweiligen Segmente $S_i$ zueinander über alle Segmente $S_i$ minimiert werden:

$$E = \sum_{k=1}^{c} \sum_{i,j \mid i \neq j, f_i, f_j \in S_K} d(i, j)$$

Hierbei gibt E die Summe der Segmentenergien an. Das Ziel ist die Minimierung der Summe der Segmentenergien für die definierten Segmente $S_i$.

Zur Minimierung der globalen Kostenfunktion eignet sich z.B. ein einfaches Clusterverfahren wie z.B. kMeans, wie dieses beispielsweise in [6] veröffentlicht ist. Dieses Clusterverfahren ist jedoch heuristischer Natur und kann in lokalen Minima der Kostenfunktion hängen bleiben. Dies hat zur Folge, dass nicht notwendigerweise die global optimale Zuordnung der Punkte zu den definierten Segmenten erfolgt. Ein weiterer Nachteil besteht darin, dass die Anzahl der Segmente c vorzugeben ist.

Vorteilhaft ist es deshalb, als Kostenfunktion die Kosten des Normalized-Cut auf die Baumsegmentierung anzuwenden. Dieses Verfahren ist beispielsweise in [7] beschrieben. Bei diesem Verfahren werden alle Merkmalsvektoren als Elemente der Knotenmenge V in einem aufzustellenden Graphen G = {V,E} aufgefasst. Die Elemente der Kantenmenge E bilden die Abstände d(i,j) = $w_{ij}$ eines der oben definierten Abstandsmaße. Ziel ist somit die Aufteilung des Graphen in zwei disjunkte Kno*tenmengen A := $S_1$* und B := $S_2$ so, dass die Ähnlichkeiten zwischen den Elementen jeweils in den Knotenmengen A und B maximiert und gleichzeitig die Ähnlichkeiten zwischen den Elementen aus unterschiedlichen Teilmengen minimiert werden. Die Kostenfunktion ist damit

$$NCut(A, B) = \frac{Cut(A, B)}{Assoc(A, V)} + \frac{Cut(A, B)}{Assoc(B, V)},$$

wobei $Cut(A, B) = \sum_{i \in A, j \in B} w_{ij}$ die Summe aller Gewichte zwischen den Segmenten A und B ist und $(A, V) = \sum_{i \in A, j \in V} w_{ij}$

die Summe aller Gewichte von Kanten, die in dem Segment A enden.

Das minimale NCut-Maß und damit die Aufteilung der Punkte in die beiden Teilmengen A und B wird durch die Lösung eines generalisierten Eigenwertproblems $(D-W)_y = \lambda Dy$ gefunden, wobei die Matrix W durch alle Gewichte $w_{ij}$ gebildet wird und $D_i = \Sigma_j w_{ij}$ ist. Die Lösung, d.h. der Eigenvektor y zum zweitkleinsten Eigenwert $\lambda$, besteht nach Binarisierung über eine Schwelle aus den Werten +1,-1}, welche die Zuordnung der Merkmalsvektoren bzw. der Punkte anzeigt.

Dieses Verfahren minimiert optimal das gegebene Kostenmaß, im Gegensatz zu vorher erwähnten, prinzipiell jedoch auch anwendbaren kMeans-Verfahren. Ein weiterer Vorteil besteht darin, dass die Anzahl c der Segmente nicht explizit vorgegeben werden muss, sondern bei wiederholter iterativer Anwendung des Verfahrens über eine Schwelle an das NCut-Maß als Abbruchkriterium implizit gegeben ist.

Eine weitere vorteilhafte Variante zur Minimierung der globalen Kostenfunktion ist die Verwendung des GraphCut-Verfahrens, das in [8] beschrieben ist. Dieses Verfahren bezweckt die Auffindung der beiden Teilgraphen bzw. Segmente, wobei der Graph wie zuvor beschrieben gebildet wird. Das Verfahren sucht dabei die beiden Teilgraphen derart aus, dass der "Fluss" zwischen den Teilgraphen maximiert wird. Als Fluss wird dabei die Summe aller Gewichte von Kanten, welche die Teilgraphen verbinden, bezeichnet. Dies erfolgt in Anlehnung an Aufgabenstellungen aus Verkehrskapazitätsberechnungen eines Straßennetzes. Auch dieses Verfahren kann iterativ auf den Teilgraphen fortgesetzt werden.

Neben den bereits genannten, ergänzenden punktbezogenen Merkmalen (Pulsbreite und Intensität) aus dem Signal eines einzelnen Laserstrahls ist es vorteilhaft, weitere punktbezogene Merkmale aus lokalen Umgebungen um die Punkte herum zu bestimmen und den Merkmalsvektoren hinzuzufügen. Diese weiteren punktbezogenen Merkmale können aus Beiträgen von Punkten aus einer bestimmten jeweiligen Nachbarschaft ermittelt werden. Im einfachsten Fall können zu jedem Punkt weitere Merkmale m(X) auf Basis der Merkmale anderer Punkte aus einer fest definierten Umgebung gebildet werden, wie z.B. die Streuung der Intensitäten oder die Summe aller Intensitäten. Denkbar ist beispielsweise die Bestimmung über eine kernbasierte Filterung der auszuwählenden Merkmalsvektorkomponenten:

$$m(X) = \frac{1}{N_R h} \frac{\sum_i^{N_R} m(X_i) K((X - X_i)/h)}{\sum_i^{N_R} K((X - X_i)/h)},$$

wobei K(X) eine Kernfunktion bezeichnet, z.B. eine Gauß-Glockenkurve, und h als Parameter die Breite der einzubeziehenden Nachbarschaft steuert. Die Summe im Nenner über die Anzahl der Gaußfunktionen dient einer Normierung.

Es ist weiterhin vorteilhaft, ein a-priori-Wissen über Stammpositionen von Bäumen auszunutzen. Dieses Wissen kann in das erfindungsgemäße Verfahren eingekoppelt werden. Hierzu wird gemäß dem oben ermittelten allgemeinen Abstandsmaß jeder Punkt entsprechend seinem minimalen horizontalen Abstand $d_{ij}^G$ zum nächsten Baumstamm gewichtet. Dies bedeutet beispielsweise, je näher ein Punkt an einem Baumstamm liegt, desto größer ist die Wahrscheinlichkeit, dass der Punkt zu einem bestimmten Segment und damit Baumstamm gehört.

Informationen über Positionen von Baumstämmen können beispielsweise nach den in [9] und [10] beschriebenen Verfahren durch eine Bestimmung von vertikalen Geraden in der Punktewolke gewonnen und im erfindungsgemäßen Verfahren genutzt werden.

Die Segmentierung der Punkte P der Punktwolke PW ist in Fig. 1 bei "3" schematisch dargestellt. Hierbei wurden die Punkte P in die Punkte P1 eines Segments A und Punkte P2 eines Segments B eingeteilt. Das Ergebnis der Segmentierung ist schematisch bei "4" illustriert.

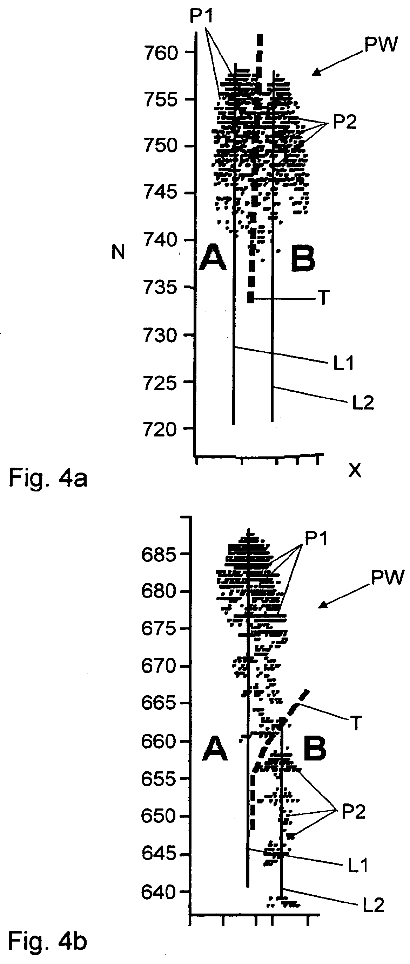

Die Fig. 4a bis 4c zeigen beispielhafte Ergebnisse von segmentierten Bäumen. Hierbei ist jeweils ein zweidimensionaler Ausschnitt aus dem dreidimensionalen, räumlichen Koordinatensystem dargestellt, wobei über die Hochachse (z-Achse im Koordinatensystem) eine Höhe N dargestellt ist. Die Abszisse repräsentiert beispielsweise die x-Achse im festgelegten Koordinatensystem (vgl. z.B. Fig. 2). In Fig. 4a ist eine fiktive Trennlinie T eingezeichnet, welche die Segmente A und B und die jeweils zugeordneten Punkte P1, P2 voneinander abgrenzt. Die Trennlinie T wurde hierbei durch die Minimierung der globalen Kostenfunktion E ermittelt. Darüber hinaus sind zwei Hilfslinien L1, L2 eingezeichnet, wobei die Hilfslinie L1 einen Baumstamm des Segments A und die Hilfslinie L2 einen Baumstamm des Segments B repräsentiert. Die Hilfslinien L1, L2 sind zur Verifikation des Verfahrens durch Begehung des untersuchten Waldabschnitts ermittelt worden.

In entsprechender Weise illustriert Fig. 4b zwei Segmente A, B mit einem jeweiligen Baum. Hierbei weisen die Bäume eine unterschiedliche Höhe auf, was durch die dreidimensionale Segmentierung des erfindungsgemäßen Verfahrens ermittelbar ist.

Die Hilfslinien L1, L2 repräsentieren wiederum Baumstämme und dienen zur Verifizierung des Erfolgs der vorgenommenen Segmentierung.

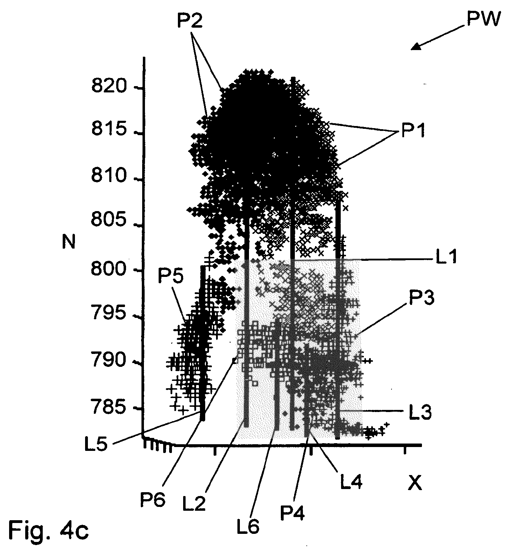

In Fig. 4c wurde als Ergebnis der Segmentierung eine Anzahl von sechs Bäumen ermittelt, welche durch die farblich jeweils unterschiedlich eingefärbten Punkte P1, ..., P6 visualisiert sind. In Anlehnung an die Darstellung der vorangegangenen Ausführungsbeispiele in den Fig. 4a und 4b sind wiederum zur Verifikation die durch Hilfslinien L1 bis L6 repräsentierten Baumstämme dargestellt. Die Lage und Höhe der Baumstämme wurde durch Begehung des überprüften Waldabschnitts ermittelt.

Wie aus diesen Ausführungsbeispielen ersichtlich ist, können mit dem erfindungsgemäßen Verfahren auch unterstehende, für die bisherigen Verfahren zur Segmentierung verdeckten/unsichtbaren Bäume erfolgreich segmentiert und identifiziert werden.

Die durch das erfindungsgemäße Verfahren ermittelten Informationen können nicht nur für quantitative Zwecke herangezogen werden, sondern auch als Basis für dreidimensionale Darstellungen von Baumgruppen dienen. Auf Basis der Informationen können beispielsweise zweidimensionale eingefärbte Karten von Waldgebieten mit bestimmten Eigenschaften erstellt werden.

Das Verfahren ermöglicht eine Auszählung von Bäumen in einem Waldgebiet. Es kann die Größenverteilung sowie die örtliche Verteilung der Bäume ermittelt werden. Darüber hinaus könnte eine Klassifikation der Bäume in verschiedene Baumarten erfolgen. Ebenso ist eine Bestimmung der Holzmenge über die Anzahl und das Volumen der Baumarten möglich.

Wird das erfindungsgemäße Verfahren in regelmäßigen Abständen wiederholt, so kann die zeitliche Entwicklung eines Waldes durch den Vergleich mehrerer Auswertungen zu verschiedenen Zeiten vorgenommen werden.

Die Segmentierung der Bäume muss nicht zwingenderweise in einem Waldgebiet erfolgen. Ebenso kann eine Baumerkennung in urbanen Gebieten vorgenommen werden, wodurch Bäume von Häusern unterschieden werden können.

Das erfindungsgemäße Verfahren eignet sich ebenso, Bäume auf Plantagen oder Sträucher auf Agrarflächen usw. zu erfassen und zu segmentieren.

Darüber hinaus kann eine Erfassung von Häusern in urbanen Gebieten oder die Erfassung einer Graupelverteilung in Wolken zur Gewittervorhersage mit dem Verfahren realisiert werden.

Literaturverzeichnis

[1] Hyyppä, J., Kelle, O., Lehikoinen, M., Inkinen, M., 2001, "A segmentationbased method to retrieve stem volume estimates from 3-D tree height models produced by laser scanners", IEEE Transactions on Geoscience and remote Sensing, 39:969-975

[2] Solberg, S., Naesset, E., Bollandsas, O. M., 2006, "Single Tree Segmentation Using Airborne Laser Scanner Data in a Structurally Heterogeneous Spruce Forest", Photogrammetric Engineering & Remote Sensing, Vol. 72, Nr. 12, Dezember 2006, Seiten 1369-1378

[3] Vincent, L., Soille, P., 1991, "Watersheds in Digital Spaces: An Efficient Algorithm Based on Immersion Simulations", IEEE Transactions of Pattern Analysis and Machine Intelligence, Vol. 13, Nr. 6, Juni 1991, Seiten 583-598

[4] Persson, A., Holmgren, J. and Söderman, U., 2002, "Detecting and measuring individual trees using an airborne laserscanner" Photogrammetric Engineering & Remote Sensing 68(9), Seiten 925-932

[5] Wang, Y., Weinacker, H., Koch, B., 2007, "Development of a Procedure for Vertical Structure Analysis and 3D-Single Tree Extraction within Forests Based on Lidar Point Cloud", Proceedings of the ISPRS Workshop Laser Scanning 2007 and SilviLaser 2007,Vol. XXXVI, PART 3/W52, 12. - 14. September 2007, Espoo, Seiten 419 - 423

[6] Duda, R.O., Hart, P.E., Stork, D.G., 2000, "Pattern Classification", zweite Edition, Wiley&Sons, Seite 526 ff.

[7] Shi, J., Malik, J., 2000, "Normalized cuts and image segmentation", IEEE Transactions on Pattern Analysis and Machine Intelligence, 22, Seiten 888-905

[8] Boykov Y., Veksler O., Zabih R., "Fast Approximate Energy Minimization via Graph Cuts", IEEE Trans. on Pattern Analysis and Machine Intelligence, Vol. 23, Nr. 11,2001

[9] Reitberger,J., Krzystek,P., Stilla,U. "Combined Tree Segmentation ans Stem Detection using Full Waveform LIDAR Data", ISPRS Workshop "SilviLaser", September 2007, Helsinki

[10] Reitberger,J., Heurich,M., Krzystek,P., Stilla,U., "Single Tree Detection in Forest Areas with High-Density LIDAR Data", ISPRS Workshop "Photogrammetric Image Analysis", September 2007, München

## Patentansprüche

1. Verfahren zur rechnergestützten Segmentierung einer Umgebung in einzelne Objekte, insbesondere eines Waldes in einzelne Bäume, bei dem

- die zu segmentierende Umgebung mit elektromagnetischer Strahlung bestrahlt wird und alle von den Objekten rückgestreute Signale (SIG_R) aus einem Volumenbereich messtechnisch erfasst werden;
- aus den rückgestreuten Signalen (SIG_R) innerhalb des Volumenbereichs räumliche Koordinaten (x, y, z) von die Rückstreuung verursachenden Punkten, die Objektbestandteile (X1, X2, ..., X5) repräsentieren, ermittelt werden und jedem der Punkte (P; P1, P2) ein Merkmalsvektor (f) zugewiesen wird, der zumindest die räumlichen Koordinaten (x, y, z) des betreffenden Punktes (P; P1, P2) umfasst,
- die Umgebung in ein vorgegebenes räumliches Raster von Voxeln eingeteilt wird und die Punkte (P; P1, P2) jeweils einem der Voxel zugewiesen werden, wobei Punkte, die im gleichen Voxel liegen, zusammengefasst werden.

- für jeden der Merkmalsvektoren (f) ein Abstandsmaß (d) ermittelt wird, das eine Ähnlichkeit zwischen den Merkmalsvektoren (f) zweier Punkte (P; P1, P2) repräsentiert;
- eine Zuordnung der den Punkten (P; P1, P2) zugewiesenen Merkmalsvektoren (f) zu disjunkten Segmenten (A, B) derart erfolgt, dass eine Kostenfunktion (E), welche die Abstandmaße (d) aller Merkmalsvektoren (f) zueinander berücksichtigt, minimiert wird, wodurch die Segmentierung der Umgebung in einzelne Objekte bereit gestellt ist;

**dadurch gekennzeichnet, dass**

2. Verfahren nach Anspruch 1, bei dem die elektromagnetische Strahlung durch kohärente Laserstrahlen erzeugt wird.

3. Verfahren nach Anspruch 2, bei dem die elektromagnetische Strahlung durch einen Full-Waveform-Laserscanner erzeugt ist, wobei eine vollständige Erfassung eines jeweiligen durch die Punkte (P; P1, P2) rückgestreuten Full-Waveform-Signals erfolgt, aus dem zumindest die Koordinaten (x, y, z) eines jeweiligen Punktes (P; P1, P2) bestimmt werden.

4. Verfahren nach Anspruch 3, bei dem das Full-Waveform-Signal zur Bestimmung der rückstreuenden Punkte (P; P1, P2) in eine Reihe von Gaußfunktionen zerlegt wird.

5. Verfahren nach Anspruch 4, bei dem für jeden der Punkte zumindest ein weiteres punktbezogenes Merkmal (W, I) aus dem zeitlichen Verlauf der Energie des rückgestreuten Signals (SIG_R) ermittelt wird, das oder die dem zugeordneten Merkmalsvektor (d) hinzugefügt wird.

6. Verfahren nach Anspruch 5, bei dem als das zumindest eine weitere punktbezogene Merkmal die Intensität (I) und/oder die Breite (W) eines zu einem Punkt (P; P1, P2) zugeordneten Signalpulses ermittelt wird.

7. Verfahren nach einem der vorhergehenden Ansprüche, bei dem das Abstandsmaß (d) durch die Anwendung einer Norm auf die Merkmalsvektoren (f) zweier Punkte (P; P1, P2) ermittelt wird.

8. Verfahren nach einem der Ansprüche 1 bis 6, bei dem das Abstandsmaß (d) ermittelt wird durch die Kombination von zumindest zwei, über einen jeweiligen Parameter ($\sigma_f$, $\sigma_{XY}$, $\sigma_Z$, $\sigma_G$) gewichteten und voneinander verschiedenen Abstandsmaßen (F, X, Z, G), wobei die voneinander verschiedenen Abstandsmaße (F, X, Y, Z) Ähnlichkeiten/Abstände in dem zumindest einen punktbezogenen Merkmal sowie räumliche Abstände der Punkte, insbesondere in x- und y-Richtung sowie in z-Richtung, unterschiedlich bewerten.

9. Verfahren nach einem der vorhergehenden Ansprüche, bei dem zur Minimierung der globalen Kostenfunktion ein Cluster-Verfahren verwendet wird.

10. Verfahren nach einem der Ansprüche 1 bis 8, bei dem zur Minimierung der globalen Kostenfunktion ein graphenbasiertes Verfahren verwendet wird, bei dem ein Graph bestehend aus den Punkten (P; P1, P2) als Knoten und den Abstandsmaßen (d) zwischen den Punkten (P; P1, P2) als Kanten gebildet wird.

11. Verfahren nach einem der vorhergehenden Ansprüche, bei dem über einen oder mehrere Parameter die Anzahl der resultierenden Segmente festgelegt wird.

12. Verfahren nach einem der vorhergehenden Ansprüche, bei dem als Objekte Bäume in einem Wald segmentiert werden, wobei Positionen von Baumstämmen über eine Bestimmung von vertikalen Geraden in der Menge an Punkten (P; P1, P2) ermittelt werden.

13. Computerprogrammprodukt, das direkt in den internen Speicher eines digitalen Rechners geladen werden kann und Softwarecodeabschnitte umfasst. mit denen die Schritte gemäß einem der vorhergehenden Ansprüche ausgeführt werden, wenn das Produkt auf einem Rechner läuft.

14. Vorrichtung zur rechnergestützten Segmentierung einer Umgebung in einzelne Objekte, insbesondere eines Waldes in einzelne Bäume, umfassend

- ein erstes Mittel zum Ermitteln von Punkten, die Objektbestandteile ($X_1$, $X_2$, ..., $X_5$) repräsentieren, wobei jedem der Punkte (P; P1, P2) durch das erste Mittel ein Merkmalsvekto- (f) zuweisbar ist, der die Koordinaten (x, y, z) des betreffenden Punktes (P; P1, P2) umfasst;

- ein zweites Mittel zur Ermittlung eines Abstandsmaßes (d) für jeden der Merkmalsvektoren (f), das eine Ähnlichkeit zwischen den Merkmalsvektorren (f) zweier Punkte (P; P1, P2) repräsentiert;

- ein drittes Mittel zur Zuordnung der den Punkten (P; P1, P2) zugewiesenen Merkmalsvektoren (f) zu disjunkten Segmenten (A, B) derart, dass eine Kostenfunktion (E), welche die Abstandsmaße (d) aller Merkmalsvektoren (f) zueinander berücksichtigt, minimierbar ist, wodurch die Segmentierung der Umgebung in einzelne Objekte bereit gestellt ist;

- ein viertes Mittel zum Bestrahlen der zu segmentierenden Umgebung mit elektromagnetischer Strahlung und zur messtechnischen Erfassung von allen von den Objekten rückgestreuten Signalen (SIG_R) aus einem Volumenbereich;

- ein fünftes Mittel zur Ermittlung räumlicher Koordinaten (x, y, z) aus den rückgestreuten Signalen (SIG_R) innerhalb des Volumenbereichs von die Rückstreuung verursachenden Punkten, die Objektbestandteile ($x_1$, $x_2$, ..., $x_5$) repräsentieren, wobei durch das zweite Mittel jedem der Punkte (P; P1, P2) ein Merkmalsvektor (f) zuweisbar ist, der zumindest die räumlichen Koordinaten (x, y, z) des betreffenden Punktes (P; P1, P2) umfasst;

**gekennzeichnet durch**:

- ein sechstes Mittel zur Einteilung der Umgebung in ein vorgegebenes räumliches Raster von Voxeln und zur Zuweisung der Punkte (P; P1, P2) jeweils zu einem der Voxel, wobei Punkte, die im gleichen Voxel liegen, zusammengefasst werden.

**Claims**

1. A method for computer-aided segmentation of an environment into individual objects, in particular of a wood into individual trees, in which

- the environment to be segmented is irradiated with electromagnetic , radiation and all the signals (SIG_R), which are backscattered by the objects, from a volume range, are recorded by measurement technology,
- spatial co-ordinates (x, y, z) of points which cause the backscattering and represent object parts (X1, X2, ... , X5) are determined within the volume range from the backscattered signals (SIG_R), and a feature vector (f) is assigned to each of the points (P; P1, P2), which feature vector comprises at least the spatial co-ordinates (x, y, z) of the point in question (P; P1, P2);
- a distance measure (d) is determined for each of the feature vectors (f), which represents a similarity between the feature vectors (f) of two points (P; P1, P2);
- an allocation of the feature vectors (f) assigned to the points (P; P1, P2) to disjoint segments (A, B) is carried out in such a manner that a cost function (E) which takes into account the distance measures (d) of all the feature vectors (f) to each other is minimized, as a result of which the segmentation of the environment into individual objects is provided;

**characterized in that**

- the environment is divided into a predefined spatial grid of voxels and the points (P; P1, P2) are in each case assigned to one of the voxels, wherein points which lie in the same voxel are combined.

2. The method according to claim 1, in which the electromagnetic radiation is generated by coherent laser beams.

3. The method according to claim 2, in which the electromagnetic radiation is generated by a full waveform laser scanner, wherein a complete recording of a respective full waveform signal which is backscattered by the points (P; P1, P2) takes place, from which signal at least the co-ordinates (x, y, z) of a respective point (P; P1, P2) are determined.

4. The method according to claim 3, in which the full waveform signal is decomposed into a series of Gaussian functions in order to determine the backscattered points (P; P1, P2).

5. The method according to claim 4, in which at least one further point-related feature (W, I) is determined for each point from the temporal profile of the energy of the backscattered signal (SIG_R), which feature is added to the allocated feature vector (d).

**6.** The method according to claim 5, in which the intensity (I) and/or the width (W) of a signal pulse which is allocated to a point (P; P1, P2) is determined as the at least one further point-related feature.

**7.** The method according to one of the afore-mentioned claims, in which the distance measure (d) is determined by the application of a norm to the feature vectors (f) of two points (P; P1, P2).

**8.** The method according to one of the claims 1 to 6, in which the distance measure (d) is determined by the combination of at least two distance measures (F, X, Y, Z), which are weighted by means of a respective parameter ($\sigma_f$, $\sigma_{XY}$, $\sigma_Z$, $\sigma_G$) and differ from each other, wherein the different distance measures (F, X, Y, Z) assess similarities or distances in the at least one further point-related feature and spatial distances of the points, in particular in the x and y directions as well as the z direction, differently.

**9.** The method according to one of the afore-mentioned claims, in which a clustering method is used for minimizing the global cost function.

**10.** The method according one of the claims 1 to 8, in which a graph-based method is used for minimizing the global cost function, in which a graph consisting of the points (P; P1, P2) as nodes and the distance measures (d) between the points (P; P1, P2) as edges is formed.

**11.** The method according to one of the afore-mentioned claims, in which the number of the resulting segments is defined by means of one or a plurality of parameters.

**12.** The method according to one of the afore-mentioned claims, in which trees in a wood are segmented as the objects, wherein positions of tree trunks are determined by defining vertical lines in the set of points (P; P1, P2).

**13.** A computer program product that can be directly loaded into the internal memory of a digital computer and comprise program code segments, by means of which the steps according to one of the afore-mentioned claims are executed when the product is executed on a computer.

**14.** A device for computer-aided segmentation of an environment into individual objects, in particular of a wood into individual trees, comprising:

- a first means for determining points which represent object parts ($X_1$, $X_2$, ..., $X_5$), a feature vector (f) being assignable to each of the points (P; P1, P2) by the first means, which feature vector comprises the coordinates (x, y, z) of the point in question (P; P1, P2);
- a second means for determining a distance measure (d) for each of the feature vectors (f), which represents a similarity between the feature vectors (f) of two points (P; P1, P2);
- a third means for allocating the feature vectors (f) assigned to the points (P; P1, P2) to disjoint segments (A, B) in such a manner that a cost function (E) which takes into account the distance measures (d) of all the feature vectors (f) to each other is minimizable, as a result of which the segmentation of the environment into individual objects is provided;
- a fourth means for irradiating the environment to be segmented with electromagnetic radiation and for recording by measurement technology all the signals (SIG_R) which are backscattered by the objects from a volume range,
- a fifth means for determining spatial co-ordinates (x, y, z) of points, which cause the backscattering and represent the object parts ($X_1$, $X_2$, ..., $X_5$), from the backscattered signals (SIG_R) within the volume range, a feature vector (f) being assignable to each of the points (P; P1, P2) by the second means, which feature vector comprises at least the spatial co-ordinates (x, y, z) of the point in question (P; P1, P2);

**characterized by**:

a sixth means for dividing the environment into a predefined spatial grid of voxels and for assigning the points (P; P1, P2) in each case to one of the voxels, wherein points which lie in the same voxel are combined.

**Revendications**

**1.** Procédé de segmentation assistée par ordinateur d'un environnement en objets individuels, en particulier d'une forêt en arbres individuels, lors duquel

- l'environnement à segmenter est irradié par un rayonnement électromagnétique et tous les signaux (SIG_R) rétrodiffusés par les objets, en provenance d'une région volumétrique, sont détectés métrologiquement;
- des coordonnées spatiales (x, y, z) de points provoquant la rétrodiffusion, lesquels représentent les composants des objets (X1, X2,..., X5), sont déterminées à l'intérieur de la région volumétrique à partir des signaux rétrodiffusés (SIG_R) et à chacun des points (P; P1, P2) est attribué un vecteur caractéristique (f) qui comprend au moins les coordonnées spatiales (x, y, z) du point considéré (P; P1, P2),
- une mesure de distance (d) représentant une similarité entre les vecteurs caractéristiques (f) de deux points (P; P1, P2) est déterminée pour chacun des vecteurs caractéristiques (f);
- une association des vecteurs caractéristiques (f) attribués aux points (P; P1, P2) à des segments disjoints (A, B) est réalisée de telle manière qu'une fonction de coût (E) qui prend en considération la mesure de distance (d) de tous les vecteurs caractéristiques (f) les uns par rapport aux autres, soit réduite au minimum, ce qui permet la segmentation de l'environnement en objet individuels;

**caractérisé en ce que**

- l'environnement est divisé en une grille spatiale prédéterminée de voxels et les points (P; P1, P2) sont attribués à respectivement un voxel, où des points situés dans le même voxel sont combinés.

2. Procédé selon la revendication 1, lors duquel le rayonnement électromagnétique est généré par des faisceaux laser cohérents.

3. Procédé selon la revendication 2, lors duquel le rayonnement électromagnétique est généré par un scanner laser à onde complète, où une détection complète du signal à onde complète respectivement rétrodiffusé par les points (P; P1, P2) est réalisée, à partir duquel au moins les coordonnées (x, y, z) d'un point respectif (P; P1, P2) sont déterminées.

4. Procédé selon la revendication 3, lors duquel le signal à onde complète est divisé en une série de fonctions gaussiennes afin de déterminer les points rétrodiffusant (P; P1, P2).

5. Procédé selon la revendication 4, lors duquel, pour chacun des points, au moins une autre caractéristique (W, I) relative aux points est déterminée à partir de l'évolution dans le temps de l'énergie du signal (SIG_R) rétrodiffusé et est ajoutée au vecteur caractéristique (d) attribué.

6. Procédé selon la revendication 5, lors duquel l'intensité (I) et/ou la largeur (W) d'une impulsion de signal attribuée à un point (P; P1, P2) est déterminée en tant que l'au moins une autre caractéristique relative aux points.

7. Procédé selon l'une quelconque des revendications précédentes, lors duquel la mesure de distance (d) est déterminée par l'application d'une norme aux vecteurs caractéristiques (f) de deux points (P; P1, P2).

8. Procédé selon l'une des revendications 1 à 6, lors duquel la mesure de distance (d) est déterminée par combinaison d'au moins deux mesures de distance (F, X, Z, G) différentes l'une de l'autre et pondérées par un paramètre respectif ($\sigma_f$, $\sigma_{XY}$, $\sigma_Z$, $\sigma_G$), où les mesures de distance (F, X, Y, Z) différentes l'une de l'autre évaluent différemment des similarité/écarts dans l'au moins une caractéristique relative aux points, ainsi que des distances spatiales entre les points, en particulier dans les directions x et y ainsi que dans la direction z.

9. Procédé selon l'une quelconque des revendications précédentes, lors duquel un procédé de partitionnement des données est utilisé pour réduire au minimum la fonction de coût globale.

10. Procédé selon l'une des revendications 1 à 8, lors duquel un procédé basé sur un graphe est utilisé pour réduire au minimum la fonction de coût globale, lors duquel un graphe est formé à partir des points (P; P1, P2) en tant que sommets et des mesures de distance (d) entre les points (P; P1, P2) en tant qu'arête.

11. Procédé selon l'une quelconque des revendications précédentes, lors duquel le nombre de segments résultants est déterminé à l'aide d'un ou plusieurs paramètres.

12. Procédé selon l'une quelconque des revendications précédentes, lors duquel des arbres dans une forêt sont segmentés en tant qu'objets, où des positions de troncs d'arbres sont identifiées par une détermination de droites verticales dans l'ensemble de points (P; P1, P2).

**13.** Produit programme d'ordinateur qui peut être directement chargé dans une mémoire interne d'un ordinateur numérique et qui comprend des sections de code de logiciel, à l'aide desquelles les étapes selon l'une quelconque des revendications précédentes sont mises en oeuvre lorsque le produit est exécuté sur un ordinateur.

**14.** Dispositif de segmentation assistée par ordinateur d'un environnement en objets individuels, en particulier d'une forêt en arbres individuels, lors duquel

- un premier moyen pour déterminer des points qui représentent des composants des objets ($X_1$, $X_2$,..., $X_5$), où un vecteur caractéristique (f) qui comprend au moins les coordonnées (x, y, z) du point considéré (P; P1, P2) est attribuable à chacun des points (P; P1, P2);
- un second moyen pour déterminer une mesure de distance (d) représentant une similarité entre les vecteurs caractéristiques (f) de deux points (P; P1, P2) pour chacun des vecteurs caractéristiques (f);
- un troisième moyen pour associer les vecteurs caractéristiques (f) attribués aux points (P; P1, P2) à des segments disjoints (A, B) de telle manière qu'une fonction de coût (E) qui prend en considération la mesure de distance (d) de tous les vecteurs caractéristiques (f) les uns par rapport aux autres, soit réductible au minimum, ce qui permet la segmentation de l'environnement en objet individuels;
- un quatrième moyen pour irradier l'environnement à segmenter par un rayonnement électromagnétique et pour détecter métrologiquement tous les signaux (SIG_R) rétrodiffusés par les objets, en provenance d'une région volumétrique ;
- un cinquième moyen pour déterminer des coordonnées spatiales (x, y, z) de points provoquant la rétrodiffusion, lesquels représentent les composants des objets (X1, $X_2$,..., $X_5$), à l'intérieur de la région volumétrique, à partir des signaux rétrodiffusés (SIG_R), où un vecteur caractéristique (f) qui comprend au moins les coordonnées spatiales (x, y, z) du point considéré (P; P1, P2) est attribuable à chacun des points (P; P1, P2) par le second moyen,

**caractérisé par**:

- un sixième moyen pour diviser l'environnement en une grille spatiale prédéterminée de voxels et pour attribuer les points (P; P1, P2) à respectivement un voxel, où des points situés dans le même voxel sont combinés.

Fig. 1

Fig. 2

Fig. 3

Fig. 4a

Fig. 4b

Fig. 4c

**EP 2 288 937 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Computer Vision - A modern Approach (Chapter 14). PEARSON - PRACTICE HALL, UPPER SADDLE RIVER. 2003
- **VON REITBERGER, J. ; KRZYSTEK, P. ; STILLA, U.** Combined Tree Segmentation and Stern Detection using Fullwave Form LIDAR Data. *PROCEEDINGS OF ISPRS WORKSHOP ''SILVILASER 2007,* September 2007, 332-337
- **WAGNER, W. et al.** *ISPRS JOURNAL OF PHOTOGRAMMETRY AND REMOTE SENSING,* 01. April 2006, vol. 60 (2), 100-112
- **HYYPPÄ, J. ; KELLE, O. ; LEHIKOINEN, M. ; INKINEN, M.** A segmentationbased method to retrieve stem volume estimates from 3-D tree height models produced by laser scanners. *IEEE Transactions on Geoscience and remote Sensing,* 2001, vol. 39, 969-975
- **SOLBERG, S. ; NAESSET, E. ; BOLLANDSAS, O. M.** Single Tree Segmentation Using Airborne Laser Scanner Data in a Structurally Heterogeneous Spruce Forest. *Photogrammetric Engineering & Remote Sensing,* Dezember 2006, vol. 72 (12), 1369-1378
- **VINCENT, L. ; SOILLE, P.** Watersheds in Digital Spaces: An Efficient Algorithm Based on Immersion Simulations. *IEEE Transactions of Pattern Analysis and Machine Intelligence,* Juni 1991, vol. 13 (6), 583-598
- **PERSSON, A. ; HOLMGREN, J. ; SÖDERMAN, U.** Detecting and measuring individual trees using an airborne laserscanner. *Photogrammetric Engineering & Remote Sensing,* 2002, vol. 68 (9), 925-932
- **WANG, Y. ; WEINACKER, H. ; KOCH, B.** Development of a Procedure for Vertical Structure Analysis and 3D-Single Tree Extraction within Forests Based on Lidar Point Cloud. *Proceedings of the ISPRS Workshop Laser Scanning,* 2007
- *SilviLaser,* 12. September 2007, vol. XXXVI, 419-423
- **DUDA, R.O. ; HART, P.E. ; STORK, D.G.** Pattern Classification. Wiley&Sons, 2000, 526 ff
- **SHI, J. ; MALIK, J.** Normalized cuts and image segmentation. *IEEE Transactions on Pattern Analysis and Machine Intelligence,* 2000, vol. 22, 888-905
- **BOYKOV Y. ; VEKSLER O. ; ZABIH R.** Fast Approximate Energy Minimization via Graph Cuts. *IEEE Trans. on Pattern Analysis and Machine Intelligence,* 2001, vol. 23 (11
- **REITBERGER,J. ; KRZYSTEK,P. ; STILLA,U.** Combined Tree Segmentation ans Stem Detection using Full Waveform LIDAR Data. *ISPRS Workshop ''SilviLaser,* September 2007
- **REITBERGER,J. ; HEURICH,M. ; KRZYSTEK,P. ; STILLA,U.** Single Tree Detection in Forest Areas with High-Density LIDAR Data. *ISPRS Workshop ''Photogrammetric Image Analysis,* September 2007